# EUROPÄISCHE PATENTSCHRIFT

(11) **EP 0 659 814 B1**
(45) Veröffentlichungstag und Bekanntmachung des Hinweises auf die Patenterteilung: **11.03.1998**
(21) Anmeldenummer: 94119608.1
(22) Anmeldetag: 12.12.1994
(51) Int. Cl.: C08K 5/00, C08K 5/13

(54) **Verwendung von Antikernverfärbungsmitteln bei der Herstellung von Schaumstoffen auf Isocyanatbasis**
Use of anti-scorch agents in the preparation of isocyanate-based foams
Utilisation d'agents contre la décoloration central pendant le préparation de mousses à partir d'isocyanate

(30) Priorität: 23.12.1993 DE 4344180
(43) Veröffentlichungstag der Anmeldung: 28.06.1995
(73) Patentinhaber: BAYER AG, 51368 Leverkusen (DE)
(72) Erfinder: Haas, Peter, Dr., D-42781 Haan (DE); Meyer-Ahrens, Sven, Dr., D-51375 Leverkusen (DE); Jacobs, Gundolf, Dr., D-51503 Rösrath (DE)

(56) Entgegenhaltungen:
- EP-A- 0 148 729
- EP-A- 0 200 685
- EP-A- 0 333 468
- EP-A- 0 574 651
- DE-A- 2 409 374
- US-A- 3 649 667
- DATABASE WPI Week 7003, Derwent Publications Ltd., London, GB; AN 4345R 'PREVENTING DISCOLORATION OF POLYOLEFINS' & JP-A-45 000 280 (MITSUBISHI RAYON)

## Beschreibung

Polyurethanschaumstoffe niedriger Rohdichte neigen wegen der hohen Exothermie bei großen Wassermengen durch die starke Treibreaktion zur Kernverfärbung.

Gegen diese temperaturbedingte Verfärbungsreaktion sind eine Reihe von Stabilisatoren literaturbekannt. Eine ausgesprochen gute Wirksamkeit zeigt z.B. 4-Methyl-2,6-ditertbutylphenol (BHT). Mit diesem Stabilisator sind daher überwiegend die Polyolkomponenten ausgerüstet.

Diese Stabilisierung führt jedoch auch zu einer Reihe bekannter Nachteile, die die Verfärbung von Textilien und des Schaumstoffes durch inzwischen aufgeklärte Reaktionen betreffen (vgl. K.C. Smelts, Textile Chemist and Colorist, April 83, Vol. 15, Nr. 4, E. Schmidt, Textilveredlung 17/1982), Nr. 6, H.-W. Hemmpel, Textil Praxis International 1983, Ausg. März/April.

Als weitere große Gruppen von Antikernverfärbungsmitteln sind in der Literatur die Ester der 4-Hydroxy-3,5-di-tert.-butyl-phenylpropionsäure beschrieben. Eine Stabilisierung von Schaumstoffen auf Isocyanatbasis, vor allem von Polyurethanschaumstoffen mit dem Ziel
- gute Wirksamkeit gegen Kernverfärbung
- keine Schaumstoffverfärbung durch nachträgliche Bildung von Chromophoren
- keine Textilverfärbung durch Migration von Chromophorträgern
ist bisher jedoch noch nicht realisiert worden. Aufgabe der vorliegenden Erfindung war, Antikernverfärbungsmittel mit diesem Eigenschaftsprofil ohne die Nachteile bisher verwendeter Verbindungsklassen aufzufinden.

Gegenstand der Erfindung ist die Verwendung von Verbindungen der allgemeinen Formel 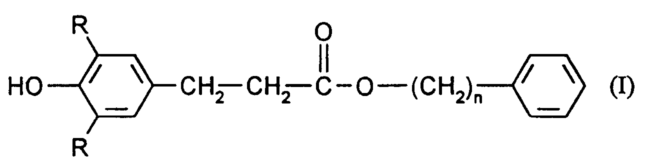 und/oder 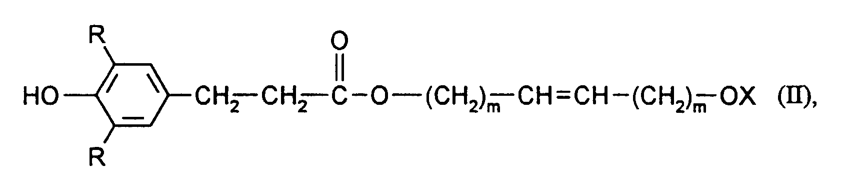 in denen
- n: eine ganze Zahl zwischen 2 und 6, bevorzugt 2 und 3
- m: eine ganze Zahl zwischen 1 und 6, bevorzugt 1 bis 3
- R: -C(CH₃)₃ und
- X: Wasserstoff oder 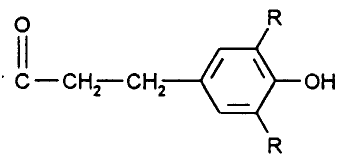
bedeuten,
als Antikernverfärbungsmittel bei der Herstellung von Schaumstoffen auf Isocyanatbasis.

Erfindungsgemäß ist bevorzugt, daß
- die Verbindungen (I) und/oder (II) in einer Menge von 0,01 bis 0,5 Gew.-%, bezogen auf den Schaumstoff auf Isocyanatbasis, eingesetzt werden,
- die Verbindungen (I) und/oder (II) in einer Menge von 0,1 bis 0,4 Gew.-%, bezogen auf den Schaumstoff aus Isocyanatbasis, eingesetzt werden,
- als Verbindung (I) 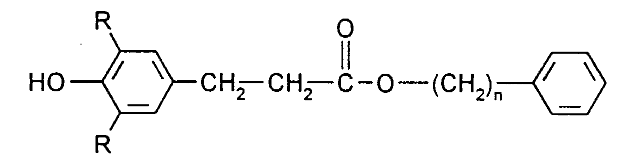 in der R die bereits genannte Bedeutung besitzt,
   eingesetzt wird,
- als Verbindung (II) 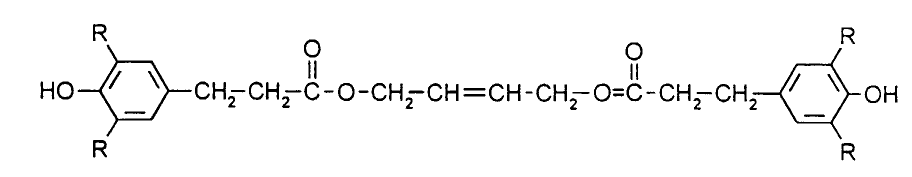 in der R die bereits genannte Bedeutung besitzt,
   eingesetzt wird,
   - weitere an sich bekannte Antikernverfärbungsmittel mitverwendet werden,
   - Diarylamine mitverwendet werden.

Vorzugsweise werden die Verbindungen (I) und/oder (II) bei der Herstellung von Polyurethanschaumstoffen und bei der Herstellung von Polyisocyanuratschaumstoffen verwendet.

In der DE-PS 2 240 609 sowie der IA-PS 16 631 sind zwar einige Alkyl- und Arylester der 4-Hydroxy-3,5-di-tert.-butylphenylpropionsäure als Stabilisatoren für Kunststoffe und Öle beschrieben, jedoch wird im Hinblick auf die vorliegende Thematik keine Lehre erteilt, zumal die aufgeführten Arylester keineswegs gleichwertig im Sinne der vorliegenden Erfindung sind. So zeigt nämlich die Verbindung 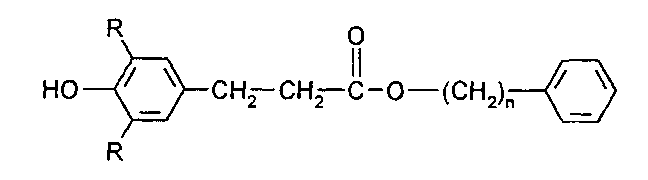 in der R die bereits genannte Bedeutung besitzt,
mit n = 1 eine starke Verfärbung des Schaumstoffs im EMPA-Textiltest (EMPA, St. Gallen, Abt. Textil-Chemie, Projekt Nr. 1145, 1984) und eine mäßige Anti-Kernverüärbung-Wirkung, während dies mit den erfindungsgemäßen Verbindungen I mit n = 2 bis 6, bevorzugt 2 und 3, überraschend nicht der Fall ist.

Ähnliches gilt für das Verhalten der Alkylester; auch hier treten nicht vorhersehbare Effekte auf. So ist Typ II dem entsprechenden 1,4-Tetramethylenester bezüglich Antioxidanswirkung sowie in der Verfärbungswirkung im Textiltest deutlich überlegen und zeigt hier praktisch keinerlei Verfärbungstendenz.

Die Herstellung von Schaumstoffen auf Isocyanatbasis ist an sich bekannt und z.B. in DE-OS 1 694 142, 1 694 215 und 1 720 768 sowie im Kunststoff-Handbuch Band VII, Polyurethane, herausgegeben von Vieweg und Höchtlen, Carl Hanser Verlag München 1966, sowie in der Neuauflage dieses Buches, herausgegeben von G. Oertel, Carl Hanser Verlag München, Wien 1983 bzw. 1993, beschrieben.

Es handelt sich dabei vorwiegend um Urethan- und/oder Isocyanurat- und/oder Allophanat- und/oder Uretdion-und/oder Harnstoff- und/oder Carbodiimidgruppen aufweisende Schaumstoffe. Die erfindungsgemäße Verwendung erfolgt vorzugsweise bei der Herstellung von Polyurethan- und Polyisocyanurat-Schaumstoffen.

Für die Herstellung der Schaumstoffe auf Isocyanatbasis werden eingesetzt:
1. Als Ausgangskomponenten aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

   Q(NCO)ₙ

   in der
   n = 2-4, vorzugsweise 2-3,
   und
   Q einen aliphatischen Kohlenwasserstoffrest mit 2-18, vorzugsweise 6-10 C-Atomen, einen cycloaliphatischen Kohlenwasserstoffrest mit 4-15, vorzugsweise 5-10 C-Atomen, einen aromatischen Kohlenwasserstoffrest mit 6-15, vorzugsweise 6-13 C-Atomen oder einen araliphatischen Kohlenwasserstoffrest mit 8-15, vorzugsweise 8-13 C-Atomen bedeuten, z.B. solche Polyisocyanate, wie sie in der DE-OS 28 32 253, Seiten 10-11, beschrieben werden. Besonders bevorzugt werden in der Regel die technisch leicht zugänglichen Polyisocyanate, z.B. das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.
2. Ausgangskomponenten sind ferner Verbindungen mit mindestens zwei gegenüber Isocyanaten reaktionsfähigen Wasserstoffatomen von einem Molekulargewicht in der Regel von 400-10.000 ("Polyolkomponente"). Hierunter versteht man neben Aminogruppen, Thiogruppen oder Carboxylgruppen aufweisende Verbindungen, vorzugsweise Hydroxylgruppen aufweisende Verbindungen, insbesondere 2 bis 8 Hydroxylgruppen aufweisende Verbindungen, speziell solche vom Molekulargewicht 1000 bis 6000, vorzugsweise 2000 bis 6000, z.B. mindestens 2, in der Regel 2 bis 8, vorzugsweise aber 2 bis 6 Hydroxylgruppen aufweisende Polyether und Polyester sowie Polycarbonate und Polyesteramide, wie sie für die Herstellung von homogenen und von zellförmigen Polyurethanen an sich bekannt sind und wie sie z.B. in der DE-OS 28 32 253, Seiten 11-18, beschrieben werden. Die mindestens zwei Hydroxylgruppen aufweisenden Polyether und Polyester sind erfindungsgemäß bevorzugt.
3. Gegebenenfalls sind weitere Ausgangskomponenten Verbindungen mit mindestens zwei gegenüber Isocyanaten reaktionsfähigen Wasserstoffatomen und einem Molekulargewicht von 32 bis 399. Auch in diesem Fall versteht man hierunter Hydroxylgruppen und/ oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispiele hierfür werden in der DE-OS 28 32 253, Seiten 19-20, beschrieben.
4. Wasser und/oder leicht flüchtige organische Substanzen als Treibmittel, z.B. n-Pentan, i-Pentan, Cyclopentan.
5. Gegebenenfalls werden Hilfs- und Zusatzmittel mitverwendet wie
   a) Katalysatoren der an sich bekannten Art,
   b) oberflächenaktive Zusatzstoffe, wie Emulgatoren und Schaumstabilisatoren,
   c) Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und weitere Flammschutzmittel der an sich bekannten Art, z.B. Trikresylphosphat und Melamin, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß- oder Schlämmkreide.

Diese gegebenenfalls mitzuverwendenden Hilfs- und Zusatzstoffe werden beispielsweise in der DE-OS 27 32 292, Seiten 21-24, beschrieben.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103-113 beschrieben.

Durchführung des Verfahrens zur Herstellung von Polyurethanschaumstoffen:

Die Reaktionskomponenten werden nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-PS 2 764 565 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl- Hanser-Verlag, München 1966, z.B. auf den Seiten 121 bis 205, beschrieben.

Die Verbindungen (I) und/oder (II) können sowohl der Polyol- als auch der Isocyanatkomponente zugesetzt werden.

Erfindungsgemäß lassen sich auch kalthärtende Schaumstoffe herstellen (vgl. GB-PS 11 62 517, DE-OS 21 53 086).

Selbstverständlich können aber auch Schaumstoffe durch Blockverschäumung oder nach dem an sich bekannten Doppeltransportbandverfahren hergestellt werden.

Polyisocyanuratschaumstoffe werden nach den hierfür bekannten Verfahren und Bedingungen hergestellt.

Die nach der Erfindung erhältlichen Produkte finden z.B. folgende Anwendung: Möbelpolsterungen, Textileinlagen, Matratzen, Automobilsitze, Armlehnen, Schwämme und Bauelemente, sowie Sitz- und Armaturverkleidungen.

### Ausführungsbeispiele

### Beispiel 1

### 3-(4-Hydroxy-3,5-di-tert.-butylphenyl)-propionsäure-2-phenylethylester

Aus 278 g (1 m) 3-(4-Hydroxy-3,5-di-tert.-butylphenyl)-propionsäure und 122 g (1 m) 2-Phenylethanol durch aceotrope Veresterung in Toluol mit 0,5 g 4-Toluolsulfonsäure.

| | | | |
|---|---|---|---|
| Analyse für C₂₅H₃₄O₃ (382) | ber. | C: 78,5 % | H: 8,9 %: |
| | gef. | C: 78,6 % | H: 9,1 %. |

### Schmelzpunkt: 72 bis 74°C

Die Struktur wird weiter durch IR- und NMR-Spektren bestätigt.

### Beispiel 2

### 2-Buten-1,4-diol-bis-[3-(4-hydroxy-3,5-di-tert.-butylphenyl)-propionat]

Aus 556 g (2 m) 3-(4-Hydroxy-3,5-di-tert.-butylphenyl)-propionsäure und 88 g (1 m) 2-Buten-1,4-diol durch aceotrope Veresterung in Toluol mit 0,5 g 4-Toluolsulfonsäure.

| | | | |
|---|---|---|---|
| Analyse für C₃₈H₅₆O₆ (608) | ber. | C: 75,0 % | H: 9,2 %: |
| | gef. | C: 74,4 % | H: 9,0 %. |

### Schmelzpunkt: 73 bis 75°C

Die Struktur wird weiter durch IR- und NMR-Spektren bestätigt.

### Beispiel 3 (Vergleich)

### 3 3-(4-Hydroxy-3,5-di-tert.-butylphenyl)-propionsäurebenzylester

Aus 278 g (1 m) 3-(4-Hydroxy-3,5-di-tert.-butylphenyl)-propionsäure und 108 g (1 m) Benzylalkohol durch aceotrope Veresterung in Toluol mit 0,5 g 4-Toluolsulfonsäure.

| | | | |
|---|---|---|---|
| Analyse C₂₄H₃₂O₃ (368) | ber. | C: 78,2 % | H: 8,7 %; |
| | gef. | C: 78,1 % | H: 8,3 %; |

### Schmelzpunkt: 68 bis 70°C.

Die Struktur wird durch IR- und NMR-Spektren bestätigt.

### Beispiel 4 (Vergleich)

### Bis-[3-(4-Hydroxy-3,5-di-tert.-butylphenyl)-propionsäurebutandiolester]

Aus 278 g (1 m) 3-(4-Hydroxy-3,5-di-tert.-butylphenyl)-propionsäure und 45 g (0,5 m) 1,4-Butandiol durch aceotrope Veresterung in Toluol mit 0,5 g 4-Toluolsulfonsäure.

| | | | |
|---|---|---|---|
| Analyse C₃₈H₅₈O₆ (610) | ber. | C: 74,7 % | H: 9,5 %; |
| | gef. | C: 74,1 % | H: 9,2 %; |

### Schmelzpunkt: 73 bis 74°C.

Die Struktur wird durch IR- und NMR-Spektren bestätigt.

Um das antioxidative Potential der erfindungsgemäßen Verbindungen zu testen, wurden diese alleinig in PUR-Weichschaumrezepturen als Antioxidans eingesetzt und nach dem Verschäumen einer Mikrowellenbehandlung ausgesetzt.

Es wurden zunächst Schaumstoffpäckchen nach folgender Rezeptur hergestellt:

| Polyolkomponente A | 100 Gew.-Teile |
|---|---|
| Stabilisator gegen Kerverfärbung gemäß Tab. 1, jeweils | 0,2 Gew.-Teile |
| Wasser | 6,0 Gew.-Teile |
| Silikonstabilisator OS 22 der Bayer AG | 1,5 Gew.-Teile |
| Aminaktivator PS 207 der Bayer AG | 0,15 Gew.-Teile |
| Zinnoctoat | 0,15 Gew.-Teile |
| TDI, bestehend aus 80 Gew.-% 2,4- und 20 Gew.-% 2,6-Toluylendiisocyanat, entspr. Isocyanatindex 108 | 70,2 Gew.-Teile |

Bei der Polyolkomponente A handelt es sich um ein auf Trimethylolpropan gestartetes Polyetherpolyol aus 85 Gew.-%, Propylenoxid und 15 Gew.-% Ethylenoxid mit überwiegend sekundären OH-Gruppen einer OH-Zahl von 45.

Es resultieren offenzellige Schaumstoffe, deren Luftdurchlässigkeit höchstens 50 mm Wassersäule zeigt.

Ein verdoppelter Ansatz wird in eine Form der Größe 100 x 200 mm gegossen. Nach beendetem Aufsteigen des Schaumstoffs wird das Päckchen in einen Mikrowellenofen vom Typ Panasonic NE 1440 mittig plaziert und für 15 Minuten auf Stufe 1 (ca. 170 Watt MW-Wirkung) erhitzt. Anschließend wird in einem Umlufttrockenschrank für 30 Minuten bei 130 bis 135°C ausgeheizt und nach 30 Minuten lagern bei Raumtemperatur in der Mitte zur Längsachse zerschnitten. Es wird eine 3 cm dicke Scheibe abgetrennt und zur Einteilung der Kernverfärbung beurteilt.
Stufe 0: völlig weiß
Stufe 10: schwarzbraun mit Zersetzungserscheinung

Textilvergilbungstest ca. 20 g eines unbehandelten weißen Baumwolltextils der Größe 200 x 200 mm werden mit 60 ml einer Lösung aus 1000 ml Wasser und 40 ml einer handelsüblichen kationischen Weichspülerlösung getränkt und um einen Schaumstoffwürfel der Größe 80 x 80 x 50 mm gehüllt. Es wird im Umlufttrockenschrank für 72 h bei 55°C getrocknet.

Anschließend können Farbveränderungen am Schaumstoff und Textil festgestellt werden.

In Tabelle 1 werden die Ergebnisse vom Mikrowellentest zur Kernverfärbung und Textiltest zum Migrations- und Verfärbungsverhalten zusammengefaßt:

| Beispiel | KV-Stabilisator gem. | KV-Gad | Verfärbungsverhalten | |
|---|---|---|---|---|
| | | | Textil | Schaumstoff |
| 1.1 | Beispiel 1 erf.gem. | 2 - 3 | weiß | weiß |
| 1.2 | Beispiel 2 erf.gem. | 2 | weiß | weiß |
| 1.3 | Beispiel 3 Vergleich | 5 | gelb | stark gelb |
| 1.4 | Beispiel 4 Vergleich | 5 | gelb | gelb |
| 1.5 | BHT Vergleich | 3 | stark gelb | stark gelb |

Es zeigt sich gemäß Tabelle 1 mit den Beispielen 1 bis 5, daß nur die erfindungsgemäßen Antioxidantien I und II die Anforderungen, d.h. eine KV-Wirkung dem bewährten BHT entsprechend sowie keine Farbveränderungen wie z.B. im EMPA-Test in Schaum und Textil ergeben.

Die in der Struktur den Verbindungen I (Beispiel 1) und II (Beispiel 2) ähnlichen Komponenten gemäß Beispielen 3 und 4 als teilweise bekannte Antioxidantien sind nicht geeignet, diese Bedingungen zu erfüllen.

Das gute Abschneiden der erfindungsgemäßen Antioxidantien I und II ist überraschend und war dem Stand der Technik nicht zu entnehmen, zumal ähnliche Strukturen andere Ergebnisse erbringen. Anwendung finden die erfindungsgemäßen Produkte vor allem in der Ausrüstung gegen Kerverfärbung von Polyether- und Polyesterpolyolen, wie sie zur Herstellung von PUR-Block- oder Formschaumstoffen eingesetzt werden. Diese Schaumstoffe zeigen im konfektionierten Zustand in Textilien, Polstermöbeln, Matratzen und Automobilsitzen keine Migrationseffekte. Selbstverständlich können auch die zur Herstellung der PUR- Schaumstoffe verwendeten Isocyanate entsprechend ausgerüstet werden.

## Patentansprüche

1. Verwendung von Verbindungen der allgemeinen Formel 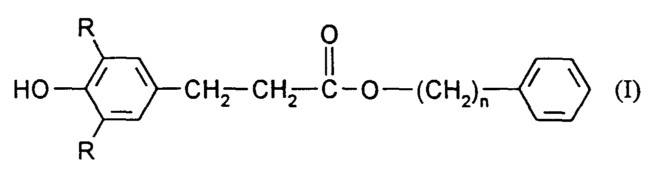 und/oder 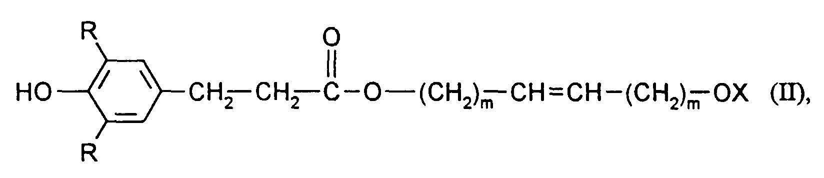 in denen
n eine ganze Zahl zwischen 2 und 6, bevorzugt 2 und 3,
m eine ganze Zahl zwischen 1 und 6, bevorzugt 1 bis 3,
R -C(CH₃)₃ und
X Wasserstoff oder 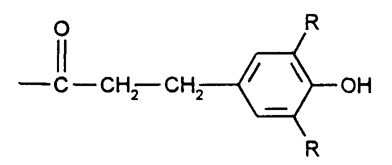
bedeuten,
als Antikernverfärbungsmittel bei der Herstellung von Schaumstoffen auf Isocyanatbasis.

2. Verwendung gemäß Anspruch 1, dadurch gekennzeichnet, daß die Verbindungen (I) und/oder (II) in einer Menge von 0,01 bis 0,5 Gew.-%, bezogen auf den Schaumstoff auf Isocyanatbasis, eingesetzt werden.

3. Verwendung gemäß Anspruch 1 und 2, dadurch gekennzeichnet, daß die Verbindungen (I) und/oder (II) in einer Menge von 0,1 bis 0,4 Gew.-%, bezogen auf den Schaumstoff auf Isocyanatbasis, eingesetzt werden.

4. Verwendung gemäß Ansprüchen 1 bis 3, dadurch gekennzeichnet, daß als Verbindung (I) 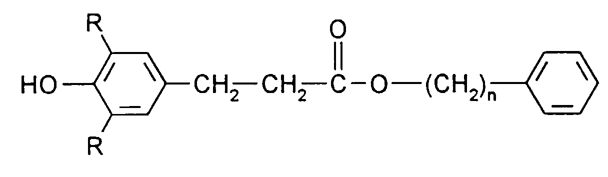 in der R die bereits genannte Bedeutung besitzt,
eingesetzt wird.

5. Verwendung gemäß Ansprüchen 1 bis 3, dadurch gekennzeichnet, daß als Verbindung (II) 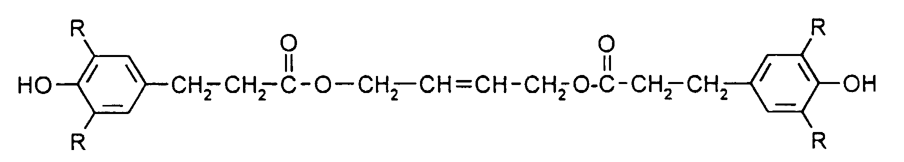 in der R die bereits genannte Bedeutung besitzt,
eingesetzt wird.

6. Verwendung gemäß Ansprüchen 1 bis 5, dadurch gekennzeichnet, daß weitere an sich bekannte Antikernverfärbungsmittel mitverwendet werden.

7. Verwendung gemäß Anspruch 7, dadurch gekennzeichnet, daß Diarylamine mitverwendet werden.

8. Verwendung der Verbindungen (I) und/oder (II) gemäß Ansprüchen 1 bis 7 bei der Herstellung von Polyurethanschaumstoffen.

9. Verwendung der Verbindungen (I) und/oder (II) gemäß Ansprüchen 1 bis 7 bei der Herstellung von Polyisocyanuratschaumstoffen.

## Claims

1. Use of compounds of the general formula 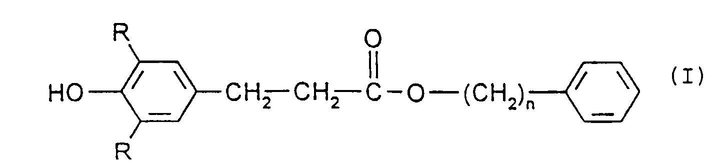 and/or 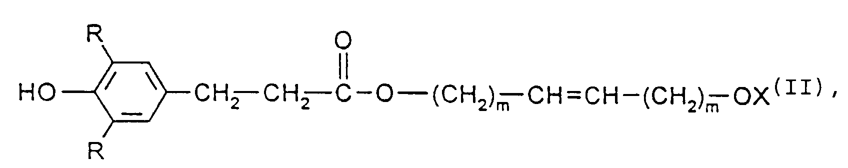 in which
n denotes an integer between 2 and 6, preferably 2 and 3,
m denotes an integer between 1 and 6, preferably 1 to 3,
R denotes -C(CH₃)₃ and
X denotes hydrogen or 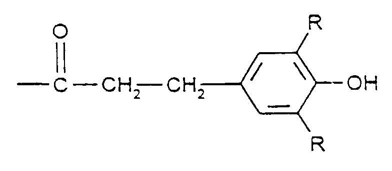
as core discolouration preventing agents in the production of isocyanate-based foams.

2. Use according to Claim 1, characterised in that compounds (I) and/or (II) are utilised in a quantity of from 0.01 to 0.5 wt.%, relative to the isocyanate-based foam.

3. Use according to Claims 1 and 2, characterised in that compounds (I) and/or (II) are utilised in a quantity of from 0.1 to 0.4 wt-%, relative to the isocyanate-based foam.

4. Use according to Claims 1 to 3, characterised in that 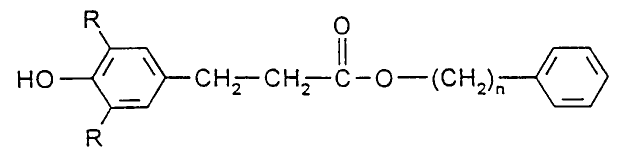 in which R denotes the same as previously indicated,
is utilised as compound (I).

5. Use according to Claims 1 to 3, characterised in that 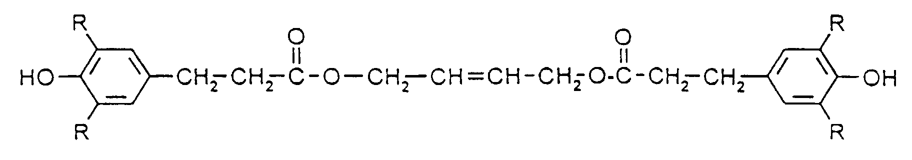 in which R denotes the same as previously indicated,
is utilised as compound (II).

6. Use according to Claims 1 to 5, characterised in that further core discolouration preventing agents which are known per se are co-used.

7. Use according to Claim 7, characterised in that diaryl amines are co-used.

8. Use of compounds (I) and/or (II) according to Claims 1 to 7 in the production of polyurethane foams.

9. Use of compounds (I) and/or (II) according to Claims 1 to 7 in the production of polyisocyanurate foams.

## Revendications

1. Utilisation de composés répondant aux formules générales 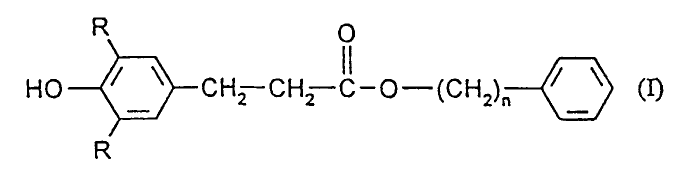 et/ou 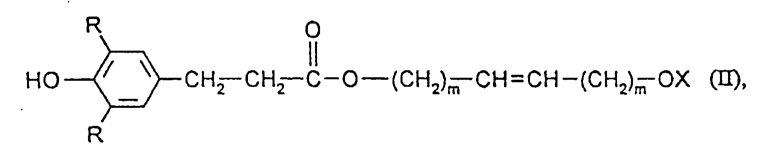 dans lesquelles
n représente un nombre entier entre 2 et 6, de préférence 2 et 3,
m représente un nombre entier entre 1 et 6, de préférence de 1 à 3,
R représente -C(CH₃)₃ et
X représente un atome d'hydrogène ou 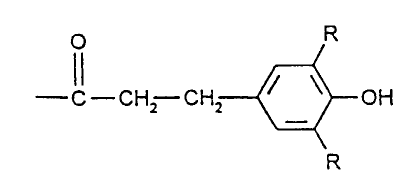
à titre d'agents s'opposant à la coloration de la partie centrale lors de la préparation de mousses à base d'isocyanate.

2. Utilisation selon la revendication 1, caractérisée en ce qu'on met en oeuvre les composés (I) et/ou (II) en une quantité de 0,01 à 0,5% en poids rapporté à la mousse à base d'isocyanate.

3. Utilisation selon les revendications 1 et 2, caractérisée en ce qu'on met en oeuvre les composés (I) et/ou (II) en une quantité de 0,1 à 0,4% en poids rapporté à la mousse à base d'isocyanate.

4. Utilisation selon les revendications 1 à 3, caractérisée en ce qu'on met en oeuvre comme composé (I) 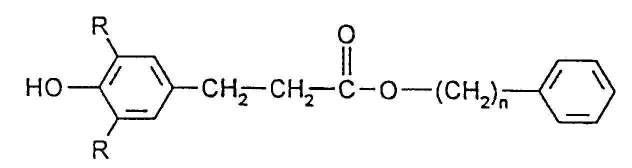 dans lequel R possède la signification déjà mentionnée.

5. Utilisation selon les revendications 1 à 3, caractérisée en ce qu'on met en oeuvre comme composé (II) 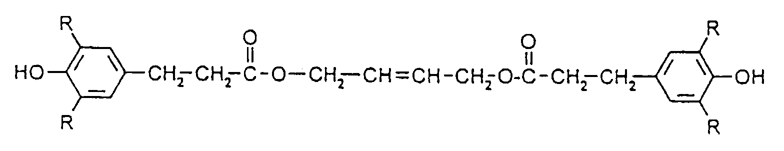 dans lequel R possède la signification déjà mentionnée.

6. Utilisation selon les revendications 1 à 5, caractérisée en ce qu'on utilise, de manière conjointe, d'autres agents connus en soi s'opposant à la coloration de la partie centrale.

7. Utilisation selon la revendication 6, caractérisée en ce qu'on utilise de manière conjointe des diarylamines.

8. Utilisation des composés (I) et/ou (II) selon les revendications 1 à 7, lors de la préparation de mousses de polyuréthanne.

9. Utilisation des composés (I) et/ou (II) selon les revendications 1 à 7, lors de la préparation de mousses de polyisocyanurate.
